# EUROPÄISCHE PATENTSCHRIFT

(11) **EP 0 682 476 B1**
(45) Veröffentlichungstag und Bekanntmachung des Hinweises auf die Patenterteilung: **22.08.2001**
(21) Anmeldenummer: 95900116.5
(22) Anmeldetag: 09.11.1994
(51) Int. Cl.: A22C 13/00

(54) **FÜNFSCHICHTIGE, BIAXIAL VERSTRECKTE SCHLAUCHFOLIE ZUR VERPACKUNG UND UMHÜLLUNG VON PASTÖSEN LEBENSMITTELN**
BIAXIALLY STRETCHED FIVE-LAYER TUBULAR FILM FOR WRAPPING AND COVERING PASTE-FORM FOODSTUFFS
FEUILLE TUBULAIRE A CINQ COUCHES ETIRABLE SELON DEUX AXES POUR L'EMBALLAGE ET LA PROTECTION DE PRODUITS ALIMENTAIRES PATEUX

(30) Priorität: 19.11.1993 DE 4339337
(43) Veröffentlichungstag der Anmeldung: 22.11.1995
(73) Patentinhaber: Naturin GmbH & Co, D-69469 Weinheim (DE)
(72) Erfinder: GRUND, Hartmut, D-67166 Otterstadt (DE)
(74) Vertreter: Klöpsch, Gerald, Dr.-Ing. Patentanwalt
(86) Internationale Anmeldenummer: EP9403676
(87) Internationale Veröffentlichungsnummer: WO9513707

(56) Entgegenhaltungen:
- EP-A- 0 467 039
- EP-A- 0 530 538
- EP-A- 0 530 549
- EP-A- 0 550 833
- EP-A- 0 603 676
- DE-A- 4 001 131
- DE-A- 4 001 612

## Beschreibung

Die Erfindung betrifft eine fünfschichtige, biaxial verstreckte Schlauchfolie mit hoher Wasserdampf- und Sauerstoffbarriere zur Verpackung von Lebensmitteln, die im Abfüllstadium pastöse oder schmelzflüssige Konsistenz aufweisen und gegebenenfalls nach dem Abfüllen einer Erhitzungsbehandlung bis zur Sterilisationstemperatur unterworfen werden. Insbesondere handelt es sich um Lebensmittel wie zum Beispiel Brüh- und Kochwürste, sowie Schmelzkäse.

Umhüllungen für solche Lebensmittel müssen eine Reihe von Anforderungen erfüllen, um für die Praxis geeignet zu sein. Die wichtigsten Anforderungen sind:
1. Die Hülle muß auch nach der Abkühlung des zuvor erhitzten Füllgutes, unabhängig von der Volumenverringerung während des Abkühlvorganges, faltenfrei um den Verpackungsinhalt anliegen, um der Ware ein verkaufsförderndes Aussehen zu verleihen.
2. Die Hülie darf sich beim Füllen und durch den Druck des sich beim Erhitzen ausdehnenden Inhalts nicht bleibend verformen. Die Hülle muß ihre exakte zylindrische Form beibehalten und darf sich nicht krümmen oder ausbeulen.
3. Die Hülle muß eine ausreichende Festigkeit haben, damit sie der Druckbeanspruchung durch das Füllgut bei der Koch- oder Sterilisationsprozedur, ohne zu platzen oder zu reißen, widerstehen kann.
4. Die Hülle darf nur eine geringe Wasserdampfdurchlässigkeit besitzen, um auch bei einer Lagerung ohne Kühlung einen zu hohen Gewichtsverlust, ein Faltigwerden der Ware,sowie eine farbliche Veränderung der Füllgutoberfläche aufgrund von Austrocknungseffekten zu vermeiden.
5. Die Hülle muß eine hohe Sauerstoffbarriere besitzen, um ein frühzeitiges Vergrauen der Füllgutoberfläche, auch bei einer Lagerung ohne Kühlung, zu verhindern.
6. Die Hülle soll Bräthaftung aufweisen, um den Absatz von Gelee zwischen Hülle und Füllgut zu verhindern.
7. Die Hülle muß sich ohne Beschädigungen raffen und clippen lassen.
8. Die Hülle muß einfach zu bedrucken sein und soll eine gute Haftung der Druckfarbe während des Brüh- und Sterilisationsprozesses zeigen.
9. Die Hülle sollte aus ökologischer Sicht unbedenklich sein, insbesondere sollten keine, eine thermische Entsorgung behindernden Chlorverbindungen und Schwermetalle enthalten sein.
10. Die Hülle soll preiswert angeboten werden.

Bisher sind keine biaxial verstreckten Schlauchfolien bekannt, die sämtliche Anforderungen erfüllen.

Biaxial verstreckte Schlauchfolien aus Polyvinylidenchlorid-Copolymerisaten (PVDC) erfüllen die Forderungen nach guten Wasserdampf- und Sauerstoffbarrieren. Faltenfreie Würste werden mit diesen Hüllen jedoch nur erhalten, wenn man sie nach dem Durchkühlen einer zusätzlichen Wärmebehandlung unterwirft, die dem Fachmann unter dem Begriff "Nachschrumpfen" bekannt ist. "Nachschrumpfen" bedeutet, daß man die durchgekühlte Wurst von ca. 3 °C einige Sekunden lang im Heißwasserbad oder durch Heißluftbehandlung auf über 80 °C erwärmt. Hierbei schrumpft die Hülle und legt sich dem Wurstbrät, dessen Volumen sich durch die Abkühlung verringert hat, enger und faltenfrei an. Dieses zusätzliche Nachschrumpfen ist jedoch in dem bekannten Prozeß der Koch- und Brühwurstfabrikation üblicherweise nicht enthalten. Daher wird dieser nachträgliche Verfahrensschritt, der zusätzliche Einrichtungen und Energie erfordert, vom Fachmann nicht oder nur ungern akzeptiert. Auch aus ökologischer Sicht werden chlorhaltige Verpackungsmittel immer stärker zurückgedrängt und durch alternative Verpackungslösungen ersetzt.

Auch bei biaxial verstreckten Schlauchfolien aus Polyethylenterephthalat ist ein Nachschrumpfen erforderlich, um faltenfreie Würste zu erhalten. Außerdem zeigen diese Wursthüllen ein ungünstiges Absetzverhalten, d.h. nach dem Brühprozeß sammelt sich in erheblichem Maße Gelee zwischen Wursthülle und Wurstgut an.

Einschichtige biaxial verstreckte Schlauchfolien auf der Basis von aliphatischen Polyamiden sind aus der Patentliteratur bekannt.

In der DE 32 27 945 wird eine einschichtige, elastische Schlauchfolie aus Polyamid beschrieben, das in der α-Form kristallisieren kann. Die besonderen elastischen Eigenschaften werden erreicht, indem der Schlauch nach der multiaxialen Verstreckung unter multiaxiaier kontrollierter Schrumpfung vollständig thermofixiert wird. Diese Hülle erfüllt einen großen Teil der Anforderungen, jedoch werden die Forderungen nach einer hohen Barriere gegenüber Sauerstoff und insbesondere Wasserdampf nicht erfüllt.

Die DE 28 50 181 beschreibt eine gerade oder gekrümmte Schlauchfolie aus einer Kunststoffmischung, die aus wenigstens einem aliphatischen Polyamid und einem lonomerharz und/oder einem modifizierten Ethylen-Vinylacetat-Copolymeren besteht. Durch Einmischen von Polymeren, die eine geringere Wasserdampfdurchlässigkeit als aliphatische Polyamide haben, kann die Wasserdampfdurchlässigkeit von Folien mit einer PA-Matrix erniedrigt werden, jedoch kann dadurch die Wasserdampfbarriere von Hüllen aus PVDC-Copolymerisaten nicht erreicht werden. Da diese Mischungsbestandteile im Vergleich zu aliphatischen Polyamiden eine hohe Sauerstoffdurchlässigkeit aufweisen, wird durch das Beimischen dieser Komponenten zum Polyamid die Sauerstoffdurchlässigkeit einer Hülle aus dieser Mischung, im Vergleich zu einer Hülle aus dem reinen Polyamid, erhöht.

Gemäß EP 02 16 094 wird eine verbesserte Sauerstoffbarriere bei gleichzeitig hoher Durchlässigkeit für Rauch-Geschmacksträger durch die Beimischung von Ethylenvinylalkohol-Copolymeren (EVOH) zum Polyamid erreicht. Ethylenvinylalkohol- Copolymere besitzen sehr gute Barriereeigenschaften gegenüber Sauerstoff, wobei diese Barriere durch Wasseraufnahme wesentlich verschlechtert wird. Auch Polyamide können erhebliche Mengen Wasser aufnehmen, wodurch die Durchlässigkeitsrate für Sauerstoff deutlich erhöht wird.

In der DE 38 01 344 wird eine biaxial verstreckte Schlauchfolie beschrieben, die aus einem Polymergemisch hergestellt wird, das aus aliphatischem Polyamid, Polyterephthalsäureester und aromatischem Polyamid besteht und zusätzlich Farbstoff enthält. Ziel dieser Polymermischung ist es, eine homogene Verteilung der Farbpigmente in der Folie zu erreichen, sowie eine problemlose biaxiale Verstreckung zu ermöglichen.

Alle aufgeführten einschichtigen Folien auf Basis von aliphatischen Polyamiden erfüllen nicht die Anforderungen nach gleichzeitiger hoher Barrierewirkung gegenüber Wasserdampf und Sauerstoff. Bei allen einschichtigen Schlauchfolien auf Basis von Polyamiden wird durch den direkten Kontakt mit der wasserhaltigen Wurstmasse Feuchtigkeit auf das Polyamid übertragen, wodurch sich eine wesentlich höhere Durchlässigkeitsrate für Sauerstoff ergibt als bei einer trockenen Polyamid-Folie. Die hohe Wasserdampfdurchlässigkeit von Polyamiden läßt sich auch durch Zumischen anderer Komponenten nicht soweit erniedrigen, daß dadurch die Wasserdampfbarriere von PVDC-Copolymerisaten erreicht werden kann.

Die von den Anwendern geforderten Eigenschaften einer Schlauchfolie für die Verpackung von Lebensmitteln läßt sich nur mit coextrudierten, biaxial verstreckten Schlauchfolien erfüllen. Insbesondere müssen dabei Materialien kombiniert werden, die hohe Wasserdampf- und Sauerstoffbarrieren besitzen. Es sind dies besonders hinsichtlich der Wasserdampfbarriere Polyolefine und hinsichtlich der Sauerstoffbarriere Blends aus aliphatischen und teilaromatischen Polyamiden.

In der DE 38 16 942 wird eine mehrschichtige Kunststoff-Folie mit einer außenseitigen Schicht aus Polyamidharz und einer innenseitigen Schicht aus Polyolefinharz beschrieben, wobei die Schicht aus Polyolefinharz in Kontakt zum Füllgut treten soll. Die Schlauchfolie wird zusätzlich einer innenseitigen Koronaentladung unterworfen und muß mit einem Blockierungsinhibitor ausgerüstet werden. Diese Vorschläge zeigen, daß Polyolefinschichten als Innenseiten von Lebensmittelverpackungsfolien von Nachteil sind, da sie zu einer unzureichenden Haftung zwischen Füllgut und Hülleninnenwand führen und den Geleeabsatz fördern. Eine Verbesserung der Haftung muß daher durch eine aufwendige Nachbehandlung im Anschluß an die Extrusion erzielt werden. Außerdem erreicht die innenseitige Koronabehandlung nicht das Polyolefin in der Liegekante, so daß hier Geleeabsatz auftritt.

Auch eine innenseitig angeordnete Schicht eines lonomerharzes in einer mehrschichtigen Polyamidfolie muß mit ionisierender Strahlung behandelt werden, wie die EP 01 27 296 zeigt.

Die DE 41 28 081 beschreibt eine mehrschichtige, biaxial verstreckte Schlauchfolie,die aus mindestens drei Schichten besteht, die als äußere Schicht mindestens eine Lage aus olefinischem (Co-)Polymeren, als Kernschicht mindestens eine Sauerstoff-sperrende Lage aus EVOH, aromatischem oder aliphatischem (Co-)Polyamid und als innere Schicht mindestens eine Wasserdampf-sperrende Lage aus aliphatischem (Co-)Polyamid, umfaßt. Diese Hülle erfüllt die Forderungen nach einer guten Wasserdampfbarriere und zeigt auch eine gute Haftung zum Füllgut. Aus dem Füllgut wird während der Lagerung jedoch Feuchtigkeit an die Kemschicht, die als Sauerstoffsperrschicht dient, weitergegeben. Da die Feuchtigkeit sich in der Kernschicht ansammelt und nicht durch die äußere Polyolefinschicht, die als Wasserdampfsperrschicht dient, abgegeben werden kann, wird die Barriere gegen Sauerstoff während der Lagerzeit immer schlechter. Daher ist diese Hülle für längere Lagerzeiten, insbesondere für eine Lagerung ohne Kühlung, nicht geeignet. Eine außenliegende Polyolefinschicht hat weiterhin den Nachteil, daß die Folie vor dem Bedruckvorgang einer Koronaentladung unterworfen werden muß, um eine ausreichende Haftung der Druckfarben zu erreichen.

In der DE 41 30 486 wird eine fünfschichtige, coextrudierte, biaxial verstreckte Schlauchfolie beschrieben, die aus mindestens drei Polyamid-Schichten aufgebaut ist,die die Kern-, die innere und die äußere Schicht bilden. Zwischen diesen Schichten liegen Schichten aus EVOH oder Haftvermittlem. Bei dem vorgeschlagenen Folienaufbau sollen eine oder zwei Haftvermittlerschichten, bestehend aus Copolymeren von Ethylen oder Propylen mit funktionellen Gruppen als Wasserdampfbarriere wirken. Solche Copolymere besitzen aufgrund der funktionellen Gruppen höhere Wasserdampfdurchlässigkeiten als Polyethylen oder Polypropylen und erreichen daher bei gleicher Schichtdicke nicht die gleiche Sperrwirkung gegenüber Wasserdampf wie eine Schicht aus Polyethylen oder Polypropylen.

Die EP 04 67 039 A2 beansprucht eine mehrschichtige, schlauchförmige Verpackungshülle auf Basis von Polyamid, die dadurch gekennzeichnet ist, daß sie aus einer äußeren Schicht auf Basis von aliphatischem Polyamid, aliphatischem Copolyamid oder einer Polymermischung aus wenigstens einer dieser Verbindungen, einer mittleren Schicht aus Polyolefin und haftungsvermittelnder Komponente und einer inneren Schicht auf Basis von aliphatischen und/oder teilaromatischen Polyamiden und/oder aliphatischen und/oder teilaromatischen Copolyamiden aufgebaut ist. Lediglich in der Beschreibung wird erwähnt, daß die mittlere Schicht entweder eine homogene Mischung aus Polyolefin und Haftvermittler sein kann oder daß der Haftvermittler an beiden Seiten der Polyolefinschicht aufgebracht ist, so daß die mittlere Schicht in eine Schicht aus einem Polyolefinkem und zwei beidseitig dieses Polyolefinkems aufgebrachten Haftvermittlerschichten besteht. Ausführungsbeispiele und Ansprüche belegen lediglich eine Mehrschichtfolie, die aus einer Außenschicht aus einem aliphatischen Polyamid, einer einzigen Mittelschicht und einer Innenschicht entweder aus dem gleichen aliphatischen Polyamid wie die Außenschicht oder aus einer Mischung aus aliphatischem und teilaromatischem Polyamid oder auch nach Anspruch 1 gänzlich aus teilaromatischem Polyamid bzw. Copolyamid aufgebaut sein kann. Die äußere Schicht ist die eigentliche Trägerschicht der mehrschichtigen Hülle und besitzt auch die größte Dicke im Vergleich zu den beiden anderen Schichten. Wenn die Sauerstoffbarriere der Hülle verbessert werden soll, wird die Innenschicht aus einer Mischung aus aliphatischem Polyamid und teilaromatischem Polyamid hergestellt. Da die Innenschicht jedoch als sehr dünne Schicht ausgeführt werden soll, sind hierdurch keine besonders guten Sauerstoffsperreigenschaften zu erwarten. Die mittlere Schicht, die als Wasserdampfbarriere dienen soll, besteht aus einer Mischung aus Polyolefin und haftungsvermittelnder Komponente. Bei der haftungsvermittelnden Komponente handelt es sich um ein mit funktionellen Gruppen modifiziertes Polyolefin. Da diese modifizierten Polyolefine eine höhere Wasserdampfdurchlässigkeit besitzen als Polyethylen oder Polypropylen, werden durch diese Beimischung die an sich guten Wasserdampfsperreigenschaften der Polyolefine verschlechtert. Weiterhin zeigt die Mittelschicht im Vergleich zu einer Schicht aus reinem Haftvermittler eine schwächere Haftung zu den Polyamidschichten, was zu Delaminationserscheinungen führen kann.

Es hat sich gezeigt, daß derartige Hüllen noch immer nicht allen Anforderungen genügen. So zeigen Würste, die in derartige Hüllen abgepackt sind, insbesondere bei einer Lagerung ohne Kühlung, noch immer einen zu hohen Gewichtsverlust, eine farbliche Veränderung der Füllgutoberfläche und ein Faltigwerden der Ware nach längerer Lagerung.

Aufgabe der Erfindung ist es daher, die bekannten Hüllen hinsichtlich Vermeidung eines Gewichtsveriustes bei Lagerung ohne Kühlung, Faltigwerden der abgepackten Ware bei Lagerung nicht im Kühlhaus sondern bei Raumtemperatur sowie Vermeidung einer farblichen Veränderung der Füllgutoberfläche zu verbessern.

Diese Aufgabe wird erfindungsgemäß durch eine fünfschichtige, coextrudierte, gegebenenfalls biaxial verstreckte und thermofixierte schlauchförmige Verpackungsfolie gemäß Patentanspruch 1.

Die innere Schicht der fünfschichtigen, vorzugsweise biaxial verstreckten und thermofixierten Schlauchfolie ist dem Füllgut zugewandt und weist Bräthaftung auf, wodurch der Absatz von Gelee zwischen Hülle und Füllgut verhindert wird. Da diese Schicht weder Sperreigenschaften gegenüber Wasserdampf oder Sauerstoff aufweisen muß und auch keiner Anforderung hinsichtlich mechanischer Festigkeit genügen muß, kann die Wandstärke so gering wie möglich gewählt werden. Die Wandstärke beträgt im allgemeinen 1 bis 8 µm.

Die äußere Schicht sorgt für einen faltenfreien Sitz der Hülle um den Verpackungsinhalt. Die mechanische Festigkeit der äußeren Polyamid-Schicht verhindert eine Verformung der Hülle während des Füllprozesses, sowie während der nachfolgenden Erhitzungsbehandlung. Auch der Druckbeanspruchung bei der Koch- oder Sterilisationsprozedur widersteht die Hülle ohne zu platzen oder zu reißen. Die äußere Schicht ist ebenfalls für die hohe Sauerstoffbarriere der Hülle verantwortlich. Da die äußere Schicht durch die praktisch wasserdampfundurchlässige mittlere Schicht aus Polyolefin vom Füllgut getrennt ist, kann die äußere Schicht auch keine Feuchtigkeit aus dem Füllgut aufnehmen, was eine Erniedrigung der Sauerstoffbarriere zur Folge hätte. Aufgrund der ausreichend hohen Oberflächenspannung der äußeren Polyamid-Schicht läßt sich die Schlauchfolie leicht bedrucken und zeigt eine gute Haftung der Druckfarben auch bei den Koch- und Sterilisationsprozeduren. Die Wandstärke dieser Schicht beträgt im allgemeinen 10 bis 40 µm.

Die aus dem gleichen Material aufgebaute innere und äußere Schicht der Schlauchfolie bestehen aus wenigstens einem aliphatischen Polyamid und/oder wenigstens einem aliphatischen Copolyamid und/oder wenigstens einem teilaromatischen Polyamid und/oder wenigstens einem teilaromatischen Copolyamid. Besonders gute Ergebnisse hinsichtlich der Sauerstoffbarriere werden mit Mischungen aus aliphatischem Polyamid und teilaromatischem Polyamid und/oder teilaromatischem Copolyamid erzielt. Der Anteil des teilaromatischen Polyamids und/oder Copolyamids beträgt 5 bis 60 %., insbesondere 10 bis 50 %, bezogen auf die Polymermischung aus teilaromatischen und aliphatischen Polyamiden und Copolyamiden.

Als aliphatische Polyamide und aliphatische Copolyamide eignen sich solche Polyamide, wie sie in allgemeiner Weise im Kunststoffhandbuch Teil VI "Polyamide" Seite 7 ff, Carl Hanser Verlag München 1966, beschrieben worden sind. Das aliphatische Polyamid ist ein Homopolykondensat aus aliphatischen primären Diaminen und aliphatischen Dicarbonsäuren oder ein Homopolymerisat von -Aminocarbonsäuren oder deren Lactamen. Das aliphatische Copolyamid enthält die gleichen Einheiten und ist z.B. ein Polymeres auf Basis von einem oder mehreren aliphatischen Diaminen und einer oder mehreren aliphatischen Dicarbonsäuren und/oder einer oder verschiedener -Aminocarbonsäuren bzw. deren Lactamen. Die aliphatischen primären Diamine enthalten insbesondere 4 bis 8 C-Atome. Geeignete Diamine sind Tetra-, Penta-, Hexa-, und Octa-methylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäuren bzw. deren Lactame enthalten 6 bis 12 C-Atome. Ein Beispiel für ω-Aminocarbonsäuren ist die 11-Aminoundecansäure. Beispiele für Lactame sind ε-Caprolactam und ω-Laurinlactam. Besonders bevorzugte aliphatische Polyamide sind Polycoprolactam (PA 6) und Polyhexamethylen-adipinamid (PA 66). Ein besonders bevorzugtes aliphatisches Copolyamid ist PA 6/66, das aus Caprolactam- Hexamethylendiamin- und Adipinsäureeinheiten besteht.

Polyamide mit ringförmigen aromatischen Komponenten werden im Kunststoffhandbuch Teil VI "Polyamide" Seite 142 ff, Carl Hanser Verlag München 1966, beschrieben.Für Extrusionszwecke kommen aufgrund der Schmelzpunkte jedoch nur teilaromatische Polyamide oder Copolyamide in Frage. Bei den teilaromatischen Polyamiden oder Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureeinheiten überwiegend oder ausschließlich die aromatischen Einheiten bilden.

Beispiele für die erste Ausführungsform sind teilaromatische Polyamide und Copolyamide, bei denen die aromatischen Diamineinheiten aus Xylylendiamin und Phenylendiamin bestehen. Die aliphatischen Dicarbonsäureeinheiten dieser Ausführungsform enthalten gewöhnlich 4 bis 10 C-Atome, wie zum Beispiel Adipinsäure, Sebazinsäure und Azelainsäure.Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA MXD6) wird von der Firma Mitsubishi Gas Chemical Company Inc. unter dem Namen MX-Nylon vertrieben.

Beispiele für die zweite Ausführungsform sind teilaromatische Polyamide und Copolyamide, bei denen die aliphatischen Diamine gewöhnlich 4 bis 8 C-Atome besitzen. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamineinheiten und aliphatische Dicarbonsäureeinheiten in Mengen von jeweils bis zu 5 Mol-% enthalten sein. Eine besonders bevorzugte Ausführungsform besteht aus Einheiten von Hexamethylendiamin, Isophthalsäure und Terephthalsäure. Dieses Polyamid (PA 61/6T) wird z.B. von der Firma EMS-Chemie AG unter dem Namen Grivory G 21 vertrieben.

Die mittlere Schicht aus Polyolefin hat die Aufgabe, als Sperrschicht für Wasserdampf zu wirken, um auch bei einer Lagerung ohne Kühlung einen zu hohen Gewichtsverlust, ein Faltigwerden der Ware, sowie eine farbliche Veränderung der Füllgutoberfläche aufgrund von Austrocknungseffekten zu vermeiden. Geeignete Polyolefine sind Homopolymere von Ethylen oder Propylen oder Copolymere von linearen α-Olefinen mit 2 bis 8 C-Atomen oder Mischungen dieser Homopolymere oder Copolymere untereinander. Besonders geeignet sind Polyolefine mit Schmelzpunkten größer als 120 °C, wie z. B. LLDPE, HDPE, Polypropylen-Homopolymerisate, sowie Polypropylen-Block- und Polypropylen-Random-Copolymerisate. Die Wandstärke der mittleren Schicht beträgt im allgemeinen 10 bis 30 µm.

Da zwischen coextrudierten Polyolefin- und Polyamid-Schichten nur geringe oder keine Haftkräfte vorhanden sind, muß, wenn eine Delamination beim bestimmungsgemäßen Gebrauch verhindert werden soll, zwischen solchen Schichten eine Haftvermittlerschicht eingefügt werden. Daher bestehen bei der erfindungsgemäßen Schlauchfolie zwei der fünf Schichten aus Haftvermittlern, die zwischen der inneren Polyamidschicht und der mittleren Polyolefinschicht, sowie zwischen der äußeren Polyamidschicht und der mittleren Polyolefinschicht angeordnet sind. Die Wandstärke jeder dieser Haftvermittlerschichten beträgt im allgemeinen 4 bis 8 µm.

Die Haftvermittlerschichten bestehen vorzugsweise aus modifizierten Polyolefinen. Es handelt sich dabei um modifizierte Homo- oder Copolymere des Ethylens und/oder Propylens und gegebenenfalls weiteren linearen α-Olefinen mit 3 bis 8 C-Atomen, die Monomere aus der Gruppe der α,β-ungesättigten Dicarbonsäuren, wie z.B. Maleinsäure, Fumarsäure, Itaconsäure oder deren Säureanhydride, Säureester, Säureamide oder Säureimide aufgepfropft enthalten. Weiterhin geeignet sind Copolymerisate von Ethylen oder Propylen und gegebenenfalls weiteren linearen α-Olefinen mit 3 bis 8 C-Atomen mit α,β-ungesättigten Carbonsäuren wie Acrylsäure, Methacrylsäure und/oder deren Metallsalze und/oder deren Alkylestem oder entsprechende Pfropfpolymere der genannten Monomere auf Polyolefine oder partiell verseifte Ethylen/Vinylacetat-Copolymerisate, die gegebenenfalls mit einem Monomer der oben genannten Säuren pfropfpolymerisiert sind und einen niedrigen Verseifungsgrad aufweisen oder deren Mischungen. Entsprechende Produkte, die kommerziell erhältlich sind, sind z. B. unter den Handelsnamen Admer (Mitsui Petrochemical Industries, Ltd.), Plexar (DSM Polymers International), Novatec (Mitsubishi Kasei Corporation), Bynel (Du Pont Company), Surlyn (Du Pont Company) oder Primacor (Dow Chemical) bekannt.

Die erfindungsgemäße Hülle wird durch Coextrusion mit anschließender biaxialer Verstreckung und Thermofixierung hergestellt. Es ist auch möglich, nach dem biaxialen Verstrecken der geraden Schlauchfolie zunächst nach bekanntem Verfahren eine helicale Form zu verleihen und danach die Thermofixierung durchzuführen. Die biaxiale Verstreckung wird im allgemeinen so durchgeführt, daß ein Primärrohr aus einer Ringschlitzdüse extrudiert und schnell abgekühlt wird, um die teilkristallienen Polymeren möglichst im amorphen Zustand zu halten. Das Primärrohr wird dann durch Infrarotstrahlung oder Warmluft wieder aufgeheizt und zwischen zwei gasdicht schließenden Walzenpaaren, die mit unterschiedlichen Umfangsgeschwindigkeiten laufen, in der Längsrichtung, sowie durch eine eingeschlossene Luftblase in der Querrichtung, gleichzeitig biaxial verstreckt. An die biaxiale Verstreckung schließt sich die Thermofixierung an, wobei der Schlauch wiederum mit einer eingeschlossenen Luftblase einer Wärmebehandlung unterworfen wird. Ein entsprechendes Verfahren zur Herstellung von biaxial verstreckten Schlauchfolien wird z. B. in der US 3 788 503 beschrieben.

Die biaxiale Verstreckung wird bei 70 - 120 °C durchgeführt. Die Reckverhältnisse in Längs- und Querrichtung liegen im Bereich von etwa 1 : 1,5 bis 1 : 4. Das Flächenreckverhältnis liegt im Bereich von 6 bis 14. Durch die biaxiale Verstreckung werden die Polymerketten orientiert. Daher zeigt die Hülle eine ausgezeichnete Deformationsbeständigkeit, hohe Festigkeit und ein elastisches Rückdehnungsvermögen.

Die Thermofixierung wird bei Temperaturen von 100 bis 180 °C durchgeführt. Durch die Thermofixierung erreicht die Hülle ihre Dimensionsstabilität. Je nach Thermofixierungstemperatur kann eine schrumpffähige oder nicht schrumpffähige Schlauchfolie erzeugt werden. Dabei kann der Schrumpf der Folie, gemessen in Wasser bei 80 °C, im Bereich zwischen 0 und 20 % eingestellt werden. Weiterhin kann die Schlauchfolie während der Thermofixierungsbehandlung einer kontrollierten Schrumpfung in Längs- und Querrichtung unterworfen werden.

Bei der Coextrusion von Schlauchfolien und Rohren werden Coextrusionswerkzeuge mit kreisspaltförmigem Austrittsquerschnitt eingesetzt, wie sie z. B. im Buch "Kunststoff Extrusionstechnik I", Seite 450 ff, Carl Hanser Verlag München Wien 1989, beschrieben werden. Dabei werden die einzelnen Schmelzeströme, die von den einzelnen Extrudern durch Aufschmelzen der thermoplastischen Polymere erzeugt werden, zuerst innerhalb des Coextrusionswerkzeuges getrennt geführt, dann innerhalb des Coextrusionswerkzeuges an einer Zusammenführungsstelle vereint und anschließend bis zum Düsenaustritt gemeinsam geführt. Bei der Coextrusion eines fünfschichtigen Schlauches müssen dem Coextrusionswerkzeug fünf Schmelzeströme zugeführt werden, die normalerweise von fünf einzelnen Extrudern erzeugt werden müssen.

Bei der erfindungsgemäßen fünfschichtigen Hülle ist es möglich, mit drei Extrudern auszukommen und dadurch Investitionskosten zu sparen, was zu einer Erniedrigung der Herstellkosten führt. Die innere und die äußere Polyamid-Schicht der fünfschichtigen Schlauchfolie können aus dem gleichen Polyamid oder Polyamid-Blend bestehen. Auch die zwei Haftvermittlerschichten können aus dem gleichen Material bestehen. Daher kann das Auschmelzen des Polyamids oder Polyamid-Blends, sowie des Haftvermittlers, mit je einem Extruder durchgeführt werden. Der vom Extruder bereitgestellte Schmelzestrom wird dann vor dem Coextrusionswerkzeug, entsprechend der Wandstärke der einzelnen Schichten, in zwei Schmelzeströme aufgeteilt, die dann dem Extrusionswerkzeug zugeführt werden. Besonders vorteilhaft ist bei der Aufteilung der Schmelzeströme der Einsatz von Zahnradpumpen, da dadurch die Menge der Einzelströme sehr genau kontrolliert werden kann.

Die Schlauchfolie kann nach bekannten Konfektionierungsverfahren weiterverarbeitet werden. Sie kann problemlos bedruckt und gerafft oder zu einseitig abgebundenen oder geclippten Hüllen verarbeitet werden. Auch der Füllvorgang mit Wurstmasse und die anschließende Erhitzungsbehandlung bis zur Sterilisationstemperatur lassen sich problemlos durchführen. Insbesondere beult die Hülle dabei nicht aus und liegt nach dem Abkühlen dem Wurstgut prall und faltenfrei an. Würste, die mit dieser Hülle hergestellt wurden, lassen sich glatt und ohne Einreißen anschneiden. Ein spiralförmiges Abpellen der Hülle ist leicht möglich. Eine Delamination der Schichten tritt dabei nicht auf.

Durch die hohe Wasserdampfbarriere der erfindungsgemäßen Hülle können Brüh- und Leberwürste, auch ohne Kühlung, ohne bemerkenswerten Gewichtsverlust gelagert werden. Die Verfärbung der Wurstoberfläche bei Verwendung von Leberwurstbrät tritt aufgrund der guten Sauerstoff- und Wasserdampfbarriere wesentlich später ein als bei ein- und mehrschichtigen Hüllen entsprechend dem Stand der Technik.

Die Erfindung wird durch die nachfolgenden Beispiele näher erläutert.

### Beispiel 1

Die Polymeren bzw. Polymer-Blends A, B und C werden getrennt voneinander in drei Extrudem plastifiziert und homogenisiert. Anschließend werden die Schmelzeströme der Polymeren A und B aufgesplittet und die nun insgesamt fünf Schmelzeströme einem Fünfschicht-Extrusionskopf zugeführt. Es wird ein Primärrohr mit dem Aufbau A/B/C/B/A extrudiert. Die einzelnen Schichten bestehen aus folgenden Materialien:
- Außenschicht:: Dryblend aus 90 % Polyamid 6 (Durethan B 40 F der Bayer AG) und 10 % Polyamid MXD6 (MX-Nyion von Mitsubishi Gas Chemical Company Inc.). Die mittlere Wandstärke beträgt 164 µm.
- Haftvermittler:: Modifiziertes Polyethylen (Admer L 2100 von Mitsui Petrochemical Industries, Ltd.). Die mittlere Wandstärke beträgt 38 µm.
- Mittelschicht:: Polyethylen (LLDPE, Dowlex 2045 E von Dow Chemical Co.). Die mittlere Wandstärke beträgt 122 µm.
- Haftvermittler:: Modifiziertes Polyethylen (Admer L 2100 von Mitsui Petrochemical Industries, Ltd.). Die mittlere Wandstärke beträgt 38 µm.
- Innenschicht:: Dryblend aus 90 % Polyamid 6 (Durethan B 40 F der Bayer AG) und 10 % Polyamid MXD6 (MX-Nylon von Mitsubishi Gas Chemical Company Inc.). Die mittlere Wandstärke beträgt 38 µm.

Das Primärrohr hat einen Durchmesser von 14 mm und eine mittlere Gesamtwandstärke von 0,4 mm.

Das Primärrohr wird mit Infrarotstrahlung auf 105 °C aufgeheizt und biaxial mit einem Flächenreckverhältnis von 9,3 verstreckt. Der biaxial verstreckte Schlauch wird thermofixiert, flachgelegt und aufgewickelt. Die mittlere Gesamtwandstärke des Schlauches beträgt 55 µm, die Liegebreite beträgt 62 mm. Die mittleren Wandstärken der einzelnen Schichten betragen:

| | |
|---|---|
| Außenschicht | 23 µm |
| Haftvermittler | 5 µm |
| Mittelschicht | 17 µm |
| Haftvermittler | 5 µm |
| Innenschicht | 5 µm |

### Beispiel 2

Analog Beispiel 1 wird ein fünfschichtiges Primärrohr mit folgendem Aufbau hergestellt:
- Außenschicht:: Dryblend aus 70 % Polyamid 6 (Ultramid B 4 der BASF AG), 20 % Polyamid MXD6 (MX-Nylon von Mitsubishi Gas Chemical Company Inc.) und 10 % Polyamid 6I/6T (Grivory G 21 der EMS Chemie AG).
- Haftvermittler:: Modifiziertes Polypropylen (Novatec AP 196 P von Mitsubishi Kasei Co.).
- Mittelschicht:: Polypropylen-Copolymer (Novolen 3200 HX der BASF AG).
- Haftvermittler:: Modifiziertes Polypropylen (Novatec AP 196 P von Mitsubishi Kasei Co.).
- Innenschicht:: Dryblend aus 70 % Polyamid 6 (Ultramid B 4 der BASF AG), 20 % Polyamid MXD6 (MX-Nylon von Mitsubishi Gas Chemical Company Inc.) und 10 % Polyamid 6I/6T (Grivory G 21 der EMS Chemie AG).

Das Primärrohr wird wie im Beispiel 1 biaxial verstreckt und thermofixiert. Die Verteilung der Wandstärken entspricht Beispiel 1.

### Beispiel 3

Analog Beispiel 1 wird ein fünfschichtiges Primärrohr mit folgendem Aufbau hergestellt:
- Außenschicht:: Dryblend aus 50 % Polyamid 6 (Akulon F 138 C der DSM Polymers International) und 50 % Polyamid MXD6 (MX-Nylon von Mitsubishi Gas Chemical Company Inc.)
- Haftvermittler:: Modifiziertes Polyethylen (Bynel 4105 der Du Pont Company).
- Mittelschicht:: LLDPE (Stamylex 3026 F der DSM Polymers International).
- Haftvermittler:: Modifiziertes Polyethylen (Bynel 4105 der Du Pont Company).
- Innenschicht:: Dryblend aus 50 % Polyamid 6 (Akulon F 138 C der DSM Polymers International) und 50 % Polyamid MXD6 (MX-Nylon von Mitsubishi Gas Chemical Company Inc.)

Das Primärrohr wird wie im Beispiel 1 biaxial verstreckt und thermofixiert. Die Verteilung der Wandstärken entspricht Beispiel 1.

Zum Vergleich wurden die folgenden Schlauchmuster geprüft:
- **Vergleichsbeispiel 1:**: Schlauchfolie aus PVDC-Copolymerisat
- **Vergleichsbeispiel 2:**: Einschichtige Schlauchfolie gemäß DE 28 50 181
- **Vergleichsbeispiel 3:**: Dreischichtige Schlauchfolie gemäß EP 04 67 039
- **Vergleichsbeispiel 4:**: Fünfschichtige Schlauchfolie gemäß DE 41 30 486

In Tabelle 1 sind Barriereeigenschaften sowie die anwendungstechnischen Beurteilungen der Hüllen zusammengefaßt.

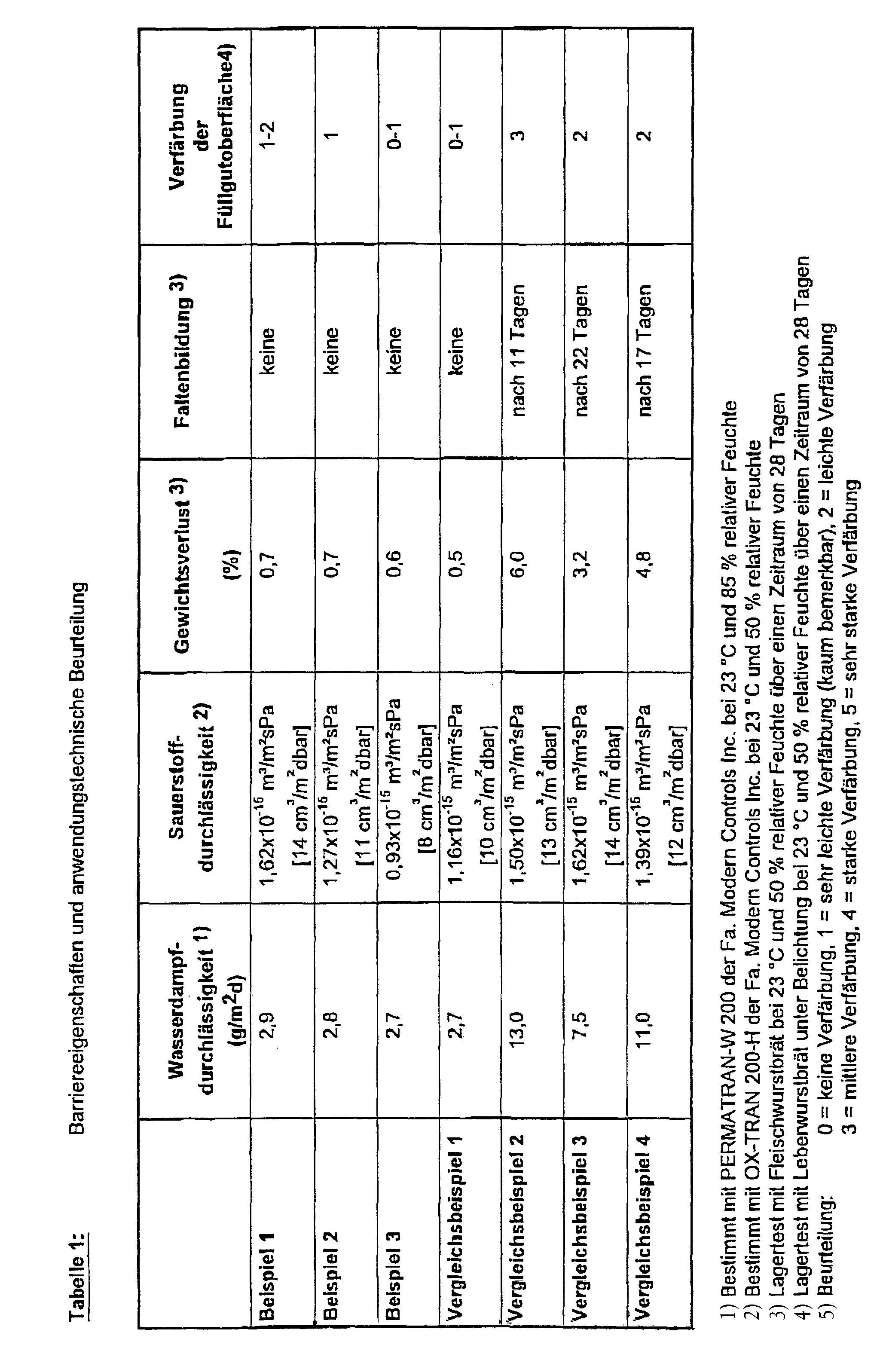

## Patentansprüche (Patentansprüche für folgende(n) Vertragsstaat(en): AT, BE, DE, DK, ES, FR, GB, IT, NL)

1. Fünfschichtige Schlauchfolie zur Verpackung und Umhüllung von pastösen Lebensmitteln, insbesondere Wursthülle, auf Basis von Polyamid, dadurch gekennzeichnet, daß sie aus einer inneren und einer äußeren Schicht aus dem gleichen Polyamidmaterial, bestehend aus wenigstens einem aliphatischen Polyamid und/oder wenigstens einem aliphatischen Copolyamid und/oder wenigstens einem teilaromatischen Polyamid und/oder wenigstens einem teilaromatischen Copolyamid, einer mittleren Polyolefinschicht sowie aus zwei aus dem gleichen Material bestehenden Hafivermittlerschichten aufgebaut ist, ausgenommen eine Schlauchfolie, die (von innen nach außen) aus einer Schicht Copolyamid 6,66, einer Schicht Ethylen-Vinylalkohol-Copolymer, einer mittleren Schicht eines Propylen-basierenden Copolymeren mit aufgepfropften Maleinsäureanhydridgruppen als polyolefinischem Haftvermittler, einer weiteren Schicht Ethylen-Vinylalkohol-Copolymer und einer weiteren Schicht Copolyamid 6,66 besteht.

2. Schlauchfolie nach Anspruch 1, dadurch gekennzeichnet, daß der Anteil des teilaromatischen Polyamids und/oder Copolyamids 5 bis 60 %, insbesondere 10 bis 50 %, bezogen auf das Gesamtgewicht der Polymermischung aus teilaromatischen und aliphatischen Polyamiden und Copolyamiden, beträgt.

3. Schlauchfolie nach einem der Ansprüche 1 bis 2, dadurch gekennzeichnet, daß das aliphatische Polyamid und/oder Copolyamid der inneren und äußeren Schicht aus wenigstens einem aliphatischen primären Diamin, vorzugsweise mit 4 bis 8 C-Atomen, insbesondere Hexamethylendiamin, und wenigstens einer aliphatischen Dicarbonsäure, vorzugsweise mit 4 bis 12 C-Atomen, insbesondere Adipinsäure, Azelainsäure, Sebazinsäure und/oder Dodecandicarbonsäure und/oder aus wenigstens einer Omegaaminocarbonsäure, insbesondere 11-Aminoundecansäure, und/oder deren Lactamen, insbesonder Epsiloncaprolactam oder Omegalaurinlactam, aufgebaut ist.

4. Schlauchfolie nach einem der Ansprüche 1 bis 3, dadurch gekennzeichnet, daß das in der inneren und äußeren Schicht enthaltene teilaromatische Polyamid und/oder Copolyamid aus aromatischen Diamineinheiten, bevorzugt Xylylendiamin und Phenylendiamin, und aliphatischen Dicarbonsäureeinheiten, vorzugsweise mit 4 bis 10 C-Atomen, insbesondere Adipinsäure, Sebazinsäure und/oder Azelainsäure und/oder aus aliphatischen Diaminen, vorzugsweise mit 4 bis 8 C-Atomen, insbesondere Tetra-, Penta-, Hexa- und Octamethylendiamin, und aromatischen Dicarbonsäuren, vorzugsweise Isophthalsäure und/oder Terephthalsäure, aufgebaut ist.

5. Schlauchfolie nach Anspruch 4, dadurch gekennzeichnet, daß neben den aromatischen Diamineinheiten und den aliphatischen Dicarbonsäureeinheiten auch noch aliphatische Diamineinheiten und aromatische Dicarbonsäureeinheiten bzw. neben den aliphatischen Diamineinheiten und den aromatischen Dicarbonsäureeinheiten auch noch aromatische Diamineinheiten und aliphatische Dicarbonsäureeinheiten in Mengen von jeweils bis zu 5 Mol.-% enthalten sind.

6. Schlauchfolien nach Ansprüchen 4 oder 5, dadurch gekennzeichnet, daß das teilaromatische Polyamid aus m-Xylylendiamin- und Adipinsäureeinheiten und/oder aus Einheiten von Hexamethylendiamin, Isophtalsäure und Terephthalsäure aufgebaut ist.

7. Schlauchfolie nach einem der Ansprüche 1 bis 6, dadurch gekennzeichnet, daß die Mittelschicht aus Polyolefin aus Homopolymeren von Ethylen oder Propylen und/oder Copolymeren von linearen Alphaolefinen mit 2 bis 8 C-Atomen aufgebaut ist.

8. Schlauchfolie nach Anspruch 7, dadurch gekennzeichnet, daß die Polyolefine der Mittelschicht einen Schmelzpunkt von größer als 120 °C aufweisen und vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

9. Schlauchfolie nach einem der Ansprüche 1 bis 8, dadurch gekennzeichnet, daß die beiden Haftvermittlerschichten aus mit funktionellen Gruppen modifizierten Polyolefinen bestehen.

10. Schlauchfolie nach Anspruch 9, dadurch gekennzeichnet, daß die modifizierten Polyolefine modifizierte Homo- oder Copolymere des Ethylens und/oder Propylens und gegebenenfalls weiteren linearen Alphaolefinen mit 3 bis 8 C-Atomen, die Monomere aus der Gruppe der Alpha-Beta-ungesättigten Dicarbonsäuren wie Maleinsäure, Fumarsäure, Itaconsäure oder deren Säureanhydride, Säureester, Säureamide oder Säureimide aufgepfropft enthalten, sind.

11. Schlauchfolie nach Anspruch 10, dadurch gekennzeichnet, daß die modifizierten Polyolefine der beiden Haftvermittlerschichten Copolymerisate von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

12. Schlauchfolie nach einem der Ansprüche 1 bis 11, dadurch gekennzeichnet, daß sie aus einer coextrudierten und biaxial verstreckten Schlauchfolie besteht.

13. Schlauchfolie nache einem der Ansprüche 1 bis 12, dadurch gekennzeichnet, daß sie thermofixiert ist.

14. Schlauchfolie nach einem der Ansprüche 1 bis 13, dadurch gekennzeichnet, daß ihre Wandstärke 30 bis 90, vorzugsweise 40 bis 80, µm beträgt.

## Patentansprüche (Patentansprüche für folgende(n) Vertragsstaat(en): CH, GR, IE, LU, MC, PT, SE, LI)

1. Fünfschichtige Schlauchfolie zur Verpackung und Umhüllung von pastösen Lebensmitteln, insbesondere Wursthülle, auf Basis von Polyamid, dadurch gekennzeichnet, daß sie aus einer inneren und einer äußeren Schicht aus dem gleichen Polyamidmaterial, bestehend aus wenigstens einem aliphatischen Polyamid und/oder wenigstens einem aliphatischen Copolyamid und/oder wenigstens einem teilaromatischen Polyamid und/oder wenigstens einem teilaromatischen Copolyamid, einer mittleren Polyolefinschicht sowie aus zwei aus dem gleichen Material bestehenden Haftvermittlerschichten aufgebaut ist.

2. Schlauchfolie nach Anspruch 1, dadurch gekennzeichnet, daß der Anteil des teilaromatischen Polyamids und/oder Copolyamids 5 bis 60 %, insbesondere 10 bis 50 %, bezogen auf das Gesamtgewicht der Polymermischung aus teilaromatischen und aliphatischen Polyamiden und Copolyamiden, beträgt.

3. Schlauchfolie nach einem der Ansprüche 1 bis 2, dadurch gekennzeichnet, daß das aliphatische Polyamid und/oder Copolyamid der inneren und äußeren Schicht aus wenigstens einem aliphatischen primären Diamin, vorzugsweise mit 4 bis 8 C-Atomen, insbesondere Hexamethylendiamin, und wenigstens einer aliphatischen Dicarbonsäure, vorzugsweise mit 4 bis 12 C-Atomen, insbesondere Adipinsäure, Azelainsäure, Sebazinsäure und/oder Dodecandicarbonsäure und/oder aus wenigstens einer Omegaaminocarbonsäure, insbesondere 11-Aminoundecansäure, und/oder deren Lactamen, insbesonder Epsiloncaprolactam oder Omegalaurinlactam, aufgebaut ist.

4. Schlauchfolie nach einem der Ansprüche 1 bis 3, dadurch gekennzeichnet, daß das in der inneren und äußeren Schicht enthaltene teilaromatische Polyamid und/oder Copolyamid aus aromatischen Diamineinheiten, bevorzugt Xylylendiamin und Phenylendiamin, und aliphatischen Dicarbonsäureeinheiten, vorzugsweise mit 4 bis 10 C-Atomen, insbesondere Adipinsäure, Sebazinsäure und/oder Azelainsäure und/oder aus aliphatischen Diaminen, vorzugsweise mit 4 bis 8 C-Atomen, insbesondere Tetra-, Penta-, Hexa- und Octamethylendiamin, und aromatischen Dicarbonsäuren, vorzugsweise Isophthalsäure und/oder Terephthalsäure, aufgebaut ist.

5. Schlauchfolie nach Anspruch 4, dadurch gekennzeichnet, daß neben den aromatischen Diamineinheiten und den aliphatischen Dicarbonsäureeinheiten auch noch aliphatische Diamineinheiten und aromatische Dicarbonsäureeinheiten bzw. neben den aliphatischen Diamineinheiten und den aromatischen Dicarbonsäureeinheiten auch noch aromatische Diamineinheiten und aliphatische Dicarbonsäureeinheiten in Mengen von jeweils bis zu 5 Mol.-% enthalten sind.

6. Schlauchfolien nach Ansprüchen 4 oder 5, dadurch gekennzeichnet, daß das teilaromatische Polyamid aus m-Xylylendiamin- und Adipinsäureeinheiten und/oder aus Einheiten von Hexamethylendiamin, Isophtalsäure und Terephthalsäure aufgebaut ist.

7. Schlauchfolie nach einem der Ansprüche 1 bis 6, dadurch gekennzeichnet, daß die Mittelschicht aus Polyolefin aus Homopolymeren von Ethylen oder Propylen und/oder Copolymeren von linearen Alphaolefinen mit 2 bis 8 C-Atomen aufgebaut ist,

8. Schlauchfolie nach Anspruch 7, dadurch gekennzeichnet, daß die Polyolefine der Mittelschicht einen Schmelzpunkt von größer als 120 °C aufweisen und vorzugsweise aus linearem Polyethylen niedriger Dichte, Polyethylen hoher Dichte, Polypropylen-Homopolymerisaten, Polypropylen-Block- und Polypropylen-Random-Copolymerisaten bestehen.

9. Schlauchfolie nach einem der Ansprüche 1 bis 8, dadurch gekennzeichnet, daß die beiden Haftvermittlerschichten aus mit funktionellen Gruppen modifizierten Polyolefinen bestehen.

10. Schlauchfolie nach Anspruch 9, dadurch gekennzeichnet, daß die modifizierten Polyolefine modifizierte Homo- oder Copolymere des Ethylens und/oder Propylens und gegebenenfalls weiteren linearen Alphaolefinen mit 3 bis 8 C-Atomen, die Monomere aus der Gruppe der Alpha-Beta-ungesättigten Dicarbonsäuren wie Maleinsäure, Fumarsäure, Itaconsäure oder deren Säureanhydride, Säureester, Säureamide oder Säureimide aufgepfropft enthalten, sind.

11. Schlauchfolie nach Anspruch 10, dadurch gekennzeichnet, daß die modifizierten Polyolefine der beiden Haftvermittlerschichten Copolymerisate von Ethylen oder Propylen und gegebenenfalls weiteren linearen Alphaolefinen mit 3 bis 8 C-Atomen mit Alpha-Beta-ungesättigten Carbonsäuren wie Acrylsäure, Methacrylsäure und/oder deren Metallsalze und/oder deren Alkylester oder entsprechende Pfropfcopolymere der genannten Monomere auf Polyolefine oder partiell verseifte Ethylen/Vinylacetatcopolymere, die gegebenenfalls mit einer Alpha-Beta-ungesättigten Carbonsäure pfropfpolymerisiert sind und einen niedrigen Verseifungsgrad aufweisen oder deren Mischungen, sind.

12. Schlauchfolie nach einem der Ansprüche 1 bis 11, dadurch gekennzeichnet, daß sie aus einer coextrudierten und biaxial verstreckten Schlauchfolie besteht.

13. Schlauchfolie nache einem der Ansprüche 1 bis 12, dadurch gekennzeichnet, daß sie thermofixiert ist.

14. Schlauchfolie nach einem der Ansprüche 1 bis 13, dadurch gekennzeichnet, daß ihre Wandstärke 30 bis 90, vorzugsweise 40 bis 80, µm beträgt.

## Claims (Claims for the following Contracting State(s): AT, BE, DE, ES, FR, GB, IT, NL)

1. A five-layer tubular film for packaging and covering pasty foodstuffs, particularly a sausage cover, on the basis of polyamide, characterized in that the tubular film is constituted of an inner and an outer layer made of the same polyamide material consisting of at least one aliphatic polyamide and/or at least one aliphatic copolyamide and/or at least one partially aromatic polyamide and/or at least one partially aromatic copolyamide, a middle polyolefin layer, and two adhesion promotor layers made of the same material, with the exception of a tubular film which (from the inside to the outside) is made up of a layer of copolyamide 6,66, a layer of ethylene-vinyl alcohol copolymer, a middle layer of a propylene-based copolymer with grafted maleic anhydride groups as polyolefinic adhesion promotor, another layer of ethylene-vinyl alcohol copolymer, and another layer of copolyamide 6,66.

2. The tubular film according to claim 1, characterized in that the percentage of partially aromatic polyamide and/- or copolyamide is from 5 to 60%, particularly from 10 to 50%, relative to the total weight of the polymer mixture of partially aromatic and aliphatic polyamides and copolyamides.

3. The tubular film according to any of claims 1 to 2, characterized in that the aliphatic polyamide and/or copolyamide of the inner and outer layers is constituted of at least one aliphatic primary diamine, preferably having from 4 to 8 C atoms, particularly hexamethylenediamine, and least one aliphatic dicarboxylic acid, preferably having from 4 to 12 C atoms, particularly adipic acid, azelaic acid, sebacic acid, and/or dodecanedicarboxylic acid, and/or at least one a ω-aminocarboxylic acid, particularly 11-aminoundecanoic acid, and/or lactams thereof, particularly e-caprolactam or ω-laurinlactam.

4. The tubular film according to any of claims 1 to 3, characterized in that the partially aromatic polyamide and/or copolyamide in the inner and outer layers is constituted of aromatic diamine units, preferably xylylenediamine and phenylenediamine, and aliphatic dicarboxylic acid units, preferably having from 4 to 10 C atoms, particularly adipic acid, sebacic acid and/or azelaic acid, and/or of aliphatic diamines, preferably having from 4 to 8 C atoms, particularly tetra-, penta-, hexa-, and octamethylenediamine, and aromatic dicarboxylic acids, preferably isophthalic acid and/or terephthalic acid.

5. The tubular film according to claim 4, characterized in that aliphatic diamine units and aromatic dicarboxylic acid units are contained in addition to the aromatic diamine units and aliphatic dicarboxylic acid units, or, aromatic diamine units and aliphatic dicarboxylic acid units in addition to the aliphatic diamine units and aromatic dicarboxylic acid units, in amounts of up to 5 mole-% in each case.

6. The tubular film according to claim 4 or 5, characterized in that the partially aromatic polyamide is constituted of m-xylylenediamine and adipic acid units and/or of units of hexamethylenediamine, isophthalic acid and terephthalic acid.

7. The tubular film according to any of claims 1 to 6, characterized in that the middle layer is constituted of a polyolefin of homopolymers of ethylene or propylene and/- or copolymers of linear α-olefins having from 2 to 8 C atoms.

8. The tubular film according to claim 7, characterized in that the polyolefins of the middle layer have a melting point of more than 120°C and preferably consist of linear low-density polyethylene, high-density polyethylene, polypropylene homopolymers, polypropylene block copolymers, and polypropylene random copolymers.

9. The tubular film according to any of claims 1 to 8, characterized in that both adhesion promotor layers are comprised of polyolefins modified with functional groups.

10. The tubular film according to claim 9, characterized in that the modified polyolefins are modified homo- or copolymers of ethylene and/or propylene and optionally other linear α-olefins having from 3 to 8 C atoms, which have monomers from the group of α,β-unsaturated dicarboxylic acids such as maleic acid, fumaric acid, itaconic acid, or anhydrides, esters, amides or imides thereof grafted thereon.

11. The tubular film according to claim 10, characterized in that the modified polyolefins of both adhesion promotor layers are copolymers of ethylene or propylene and optionally other linear α-olefins having from 3 to 8 C atoms with α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which optionally are graft-polymerized with an α,β-unsaturated carboxylic acid and have a low saponification level, or mixtures thereof.

12. The tubular film according to any of claims 1 to 11,
characterized in that said film consists of a coextruded and biaxially stretched tubular film.

13. The tubular film according to any of claims 1 to 12,
characterized in that said tubular film is heat-set.

14. The tubular film according to any of claims 1 to 13,
characterized in that said tubular film has a wall thickness of from 30 to 90, preferably from 40 to 80 *µ*m.

## Claims (Claims for the following Contracting State(s): CH, GR, IE, LU, MC, PT, SE, LI)

1. A five-layer tubular film for packaging and covering pasty foodstuffs, particularly a sausage cover, on the basis of polyamide, characterized in that the tubular film is constituted of an inner and an outer layer made of the same polyamide material consisting of at least one aliphatic polyamide and/or at least one aliphatic copolyamide and/or at least one partially aromatic polyamide and/or at least one partially aromatic copolyamide, a middle polyolefin layer, and two adhesion promotor layers made of the same material.

2. The tubular film according to claim 1, characterized in that the percentage of partially aromatic polyamide and/- or copolyamide is from 5 to 60%, particularly from 10 to 50%, relative to the total weight of the polymer mixture of partially aromatic and aliphatic polyamides and copolyamides.

3. The tubular film according to any of claims 1 to 2, characterized in that the aliphatic polyamide and/or copolyamide of the inner and outer layers is constituted of at least one aliphatic primary diamine, preferably having from 4 to 8 C atoms, particularly hexamethylenediamine, and least one aliphatic .dicarboxylic acid, preferably having from 4 to 12 C atoms, particularly adipic acid, azelaic acid, sebacic acid, and/or dodecanedicarboxylic acid, and/or at least one a ω-aminocarboxylic acid, particularly 11-aminoundecanoic acid, and/or lactams thereof, particularly ∈-caprolactam or ω-laurinlactam.

4. The tubular film according to any of claims 1 to 3, characterized in that the partially aromatic polyamide and/or copolyamide in the inner and outer layers is constituted of aromatic diamine units, preferably xylylenediamine and phenylenediamine, and aliphatic dicarboxylic acid units, preferably having from 4 to 10 C atoms, particularly adipic acid, sebacic acid and/or azelaic acid, and/or of aliphatic diamines, preferably having from 4 to 8 C atoms, particularly tetra-, penta-, hexa-, and octamethylenediamine, and aromatic dicarboxylic acids, preferably isophthalic acid and/or terephthalic acid.

5. The tubular film according to claim 4, characterized in that aliphatic diamine units and aromatic dicarboxylic acid units are contained in addition to the aromatic diamine units and aliphatic dicarboxylic acid units, or, aromatic diamine units and aliphatic dicarboxylic acid units in addition to the aliphatic diamine units and aromatic dicarboxylic acid units, in amounts of up to 5 mole-% in each case.

6. The tubular film according to claim 4 or 5, characterized in that the partially aromatic polyamide is constituted of m-xylylenediamine and adipic acid units and/or of units of hexamethylenediamine, isophthalic acid and terephthalic acid.

7. The tubular film according to any of claims 1 to 6, characterized in that the middle layer is constituted of a polyolefin of homopolymers of ethylene or propylene and/- or copolymers of linear α-olefins having from 2 to 8 C atoms.

8. The tubular film according to claim 7, characterized in that the polyolefins of the middle layer have a melting point of more than 120°C and preferably consist of linear low-density polyethylene, high-density polyethylene, polypropylene homopolymers, polypropylene block copolymers, and polypropylene random copolymers.

9. The tubular film according to any of claims 1 to 8, characterized in that both adhesion promotor layers are comprised of polyolefins modified with functional groups.

10. The tubular film according to claim 9, characterized in that the modified polyolefins are modified homo- or copolymers of ethylene and/or propylene and optionally other linear α-olefins having from 3 to 8 C atoms, which have monomers from the group of α,β-unsaturated dicarboxylic acids such as maleic acid, fumaric acid, itaconic acid, or anhydrides, esters, amides or imides thereof grafted thereon.

11. The tubular film according to claim 10, characterized in that the modified polyolefins of both adhesion promotor layers are copolymers of ethylene or propylene and optionally other linear α-olefins having from 3 to 8 C atoms with α,β-unsaturated carboxylic acids such as acrylic acid, methacrylic acid and/or metal salts and/or alkyl esters thereof, or appropriate graft copolymers of the above-mentioned monomers on polyolefins, or partially saponified ethylene-vinyl acetate copolymers which optionally are graft-polymerized with an α,β-unsaturated carboxylic acid and have a low saponification level, or mixtures thereof.

12. The tubular film according to any of claims 1 to 11,
characterized in that said film consists of a coextruded and biaxially stretched tubular film.

13. The tubular film according to any of claims 1 to 12,
characterized in that said tubular film is heat-set.

14. The tubular film according to any of claims 1 to 13,
characterized in that said tubular film has a wall thickness of from 30 to 90, preferably from 40 to 80 *µ*m.

## Revendications (Revendications pour l'(les) Etat(s) contractant(s) suivant(s): AT, BE, DE, ES, FR, GB, IT, NL)

1. Feuille tubulaire à cinq couches, destinée à l'emballage et à l'enveloppement de produits alimentaires pâteux, plus particulièrement des enveloppes de saucisses, à base de polyamide, caractérisée en ce qu'elle est constituée d'une couche interne et d'une couche externe du même matériau polyamidique, qui se compose d'au moins un polyamide aliphatique et/ou d'au moins un copolyamide aliphatique et/ou d'au moins un polyamide partiellement aromatique et/ou d'au moins un copolyamide partiellement aromatique, d'une couche médiane de polyoléfine, ainsi que de deux couches conférant de l'adhésivité formées du même matériau, à l'exception d'une feuille tubulaire qui est constituée (de l'intérieur vers l'exérieur) d'une couche de copolyamide 6,66, d'une couche de copolymère d'éthylène-alcool vinylique, d'une couche médiane d'un copolymère à base de propylène, comportant des groupes greffés d'anhydride maléique, comme agent polyoléfinique conférant de l'adhésivité, d'une autre couche de copolymère d'éthylène-alcool vinylique et d'une autre couche de copolyamide 6,66.

2. Feuille tubulaire suivant la revendication 1, caractérisée en ce que la fraction du polyamide partiellement aromatique et/ou du copolyamide partiellement aromatique varie de 5 à 60%, plus particulièrement, de 10 à 50%, par rapport au poids total du mélange des polymères constitué des polyamides et des copolyamides partiellement aromatiques et aliphatiques.

3. Feuille tubulaire suivant l'une quelconque des revendications 1 et 2, caractérisée en ce que le polyamide et/ou le copolyamide aliphatique de la couche interne et de la couche externe sont constitués d'au moins une diamine primaire aliphatique, comportant avantageusement 4 à 8 atomes de carbone, plus particulièrement l'hexaméthylènediamine et d'au moins un acide dicarboxylique aliphatique comptant de 4 à 12 atomes de carbone, plus spécialement, l'acide adipique, l'acide azélaïque, l'acide sébacique et/ou l'acide dodécanedicarboxylique et/ou d'au moins un acide omégaaminocarboxylique, plus particulièrement l'acide 11-aminoundécanoïque et/ou leurs lactames, plus spécialement l'epsiloncaprolactame, ou l'omégalaurinolactame.

4. Feuille tubulaire suivant l'une quelconque des revendications 1 à 3, caractérisée en ce que le polyamide et/ou le copolyamide partiellement aromatiques contenus dans la couche interne et la couche externe sont constitués d'unités de diamines aromatiques, de préférence, la xylylènediamine et la phénylènediamine et d'unités dicarboxyliques aliphatiques, comportant, de préférence, de 4 à 10 atomes de carbone, plus spécialement, l'acide adipique, l'acide sébacique et/ou l'acide azélaïque et/ou de diamines aliphatiques, de préférence à 4-8 atomes de carbone, plus particulièrement les tétra-, penta-, hexa- et octaméthylène-diamines et d'acides dicarboxyliques aromatiques, de préférence, l'acide isophtalique et/ou l'acide téréphtalique.

5. Feuille tubulaire suivant la revendication 4, caractérisée en ce que, outre les unités de diamines aromatiques et les unités d'acides dicarboxyliques aliphatiques, encore d'autres unités de diamines aliphatiques et d'autres unités d'acides dicarboxyliques aromatiques, ou bien outre les unités des diamines aliphatiques et les unités d'acides dicarboxyliques aromatiques, encore d'autres unités de diamines aromatiques et d'autres unités d'acides dicarboxyliques aliphatiques, y sont contenues dans une proportion allant à chaque fois jusqu'à 5% molaires.

6. Feuille tubulaire suivant la revendication 4 ou 5, caractérisée en ce que le polyamide partiellement aromatique est constitué d'unités de m-xylylènediamine et d'unités d'acide adipique et/ou d'unités d'hexaméthylènediamine, d'acide isophtalique et d'acide téréphtalique.

7. Feuille tubulaire suivant l'une quelconque des revendications 1 à 6, caractérisée en ce que la couche médiane est constituée d'une polyoléfine formée d'homopolymères de l'éthylène ou du propylène et/ou de copolymères d'alphaoléfines linéaires comportant de 2 à 8 atomes de carbone.

8. Feuille tubulaire suivant la revendication 7, caractérisée en ce que les polyoléfines de la couche médiane présentent un point de fusion supérieur à 120°C et, de préférence, se composent de polyéthylène linéaire de basse densité, de polyéthylène haute densité, d'homopolymères de polypropylène, de copolymères séquencés du polypropylène et de copolymères stochastiques du polypropylène.

9. Feuille tubulaire suivant l'une quelconque des revendications 1 à 8, caractérisée en ce que les deux couches conférant de l'adhésivité se composent de polyoléfines modifiées par des groupes fonctionnels.

10. Feuille tubulaire suivant la revendication 9, caractérisée en ce que les polyoléfines modifiées sont des homopolymères ou copolymères modifiés de l'éthylène et/ou du propylène et éventuellement d'autres alphaoléfines linéaires comptant de 3 à 8 atomes de carbone, qui contiennent à l'état greffé des monomères appartenant au groupe des acides dicarboxyliques alpha-bêta-insaturés, comme l'acide maléique, l'acide fumarique, l'acide itaconique, ou leurs anhydrides, leurs esters, leurs amides, ou leurs imides.

11. Feuille tubulaire suivant la revendication 10, caractérisée en ce que les polyoléfines modifiées des deux couches conférant de l'adhésivité sont des copolymères de l'éthylène ou du propylène et éventuellement d'autres alphaoléfines linéaires comportant de 3 à 8 atomes de carbone avec des acides carboxyliques alpha-bêta-insaturés, comme l'acide acrylique, l'acide méthacrylique et/ou leurs sels de métaux et/ou leurs esters alkyliques, ou des copolymères de greffage correspondants des monomères précités sur des polyoléfines, ou des copolymères de l'éthylène et de l'acétate de vinyle partiellement saponifiés, qui sont éventuellement polymérisés par greffage avec un acide carboxylique alpha-bêta-insaturé et qui présentent un faible degré de saponification, ou leurs mélanges.

12. Feuille tubulaire suivant l'une quelconque des revendications 1 à 11, caractérisée en ce qu'elle est constituée d'une feuille tubulaire co-extrudée et biaxialement étirée.

13. Feuille tubulaire suivant l'une quelconque des revendications 1 à 12, caractérisée en ce qu'elle est thermofixée.

14. Feuille tubulaire suivant l'une quelconque des revendications 1 à 13, caractérisée en ce que son épaisseur de paroi varie de 30 à 90 µm, de préférence 40 à 80 µm.

## Revendications (Revendications pour l'(les) Etat(s) contractant(s) suivant(s): CH, GR, IE, LU, MC, PT, SE, LI)

1. Feuille tubulaire à cinq couches, destinée à l'emballage et à l'enveloppement de produits alimentaires pâteux, plus particulièrement des enveloppes de saucisses, à base de polyamide, caractérisée en ce qu'elle est constituée d'une couche interne et d'une couche externe du même matériau polyamidique, qui se compose d'au moins un polyamide aliphatique et/ou d'au moins un copolyamide aliphatique et/ou d'au moins un polyamide partiellement aromatique et/ou d'au moins un copolyamide partiellement aromatique, d'une couche médiane de polyoléfine, ainsi que de deux couches conférant de l'adhésivité formées du même matériau.

2. Feuille tubulaire suivant la revendication 1, caractérisée en ce que la fraction du polyamide partiellement aromatique et/ou du copolyamide partiellement aromatique varie de 5 à 60%, plus particulièrement, de 10 à 50%, par rapport au poids total du mélange des polymères constitué des polyamides et des copolyamides partiellement aromatiques et aliphatiques.

3. Feuille tubulaire suivant l'une quelconque des revendications 1 et 2, caractérisée en ce que le polyamide et/ou le copolyamide aliphatique de la couche interne et de la couche externe sont constitués d'au moins une diamine primaire aliphatique, comportant avantageusement 4 à 8 atomes de carbone, plus particulièrement l'hexaméthylènediamine et d'au moins un acide dicarboxylique aliphatique comptant de 4 à 12 atomes de carbone, plus spécialement, l'acide adipique, l'acide azélaïque, l'acide sébacique et/ou l'acide dodécanedicarboxylique et/ou d'au moins un acide omégaaminocarboxylique, plus particulièrement l'acide 11-aminoundécanoïque et/ou leurs lactames, plus spécialement l'epsiloncaprolactame, ou l'omégalaurinolactame.

4. Feuille tubulaire suivant l'une quelconque des revendications 1 à 3, caractérisée en ce que le polyamide et/ou le copolyamide partiellement aromatiques contenus dans la couche interne et la couche externe sont constitués d'unités de diamines aromatiques, de préférence, la xylylènediamine et la phénylènediamine et d'unités dicarboxyliques aliphatiques, comportant, de préférence, de 4 à 10 atomes de carbone, plus spécialement, l'acide adipique, l'acide sébacique et/ou l'acide azélaïque et/ou de diamines aliphatiques, de préférence à 4-8 atomes de carbone, plus particulièrement les tétra-, penta-, hexa- et octaméthylène-diamines et d'acides dicarboxyliques aromatiques, de préférence, l'acide isophtalique et/ou l'acide téréphtalique.

5. Feuille tubulaire suivant la revendication 4, caractérisée en ce que, outre les unités de diamines aromatiques et les unités d'acides dicarboxyliques aliphatiques, encore d'autres unités de diamines aliphatiques et d'autres unités d'acides dicarboxyliques aromatiques, ou bien outre les unités des diamines aliphatiques et les unités d'acides dicarboxyliques aromatiques, encore d'autres unités de diamines aromatiques et d'autres unités d'acides dicarboxyliques aliphatiques, y sont contenues dans une proportion allant à chaque fois jusqu'à 5% molaires.

6. Feuille tubulaire suivant la revendication 4 ou 5, caractérisée en ce que le polyamide partiellement aromatique est constitué d'unités de m-xylylènediamine et d'unités d'acide adipique et/ou d'unités d'hexaméthylènediamine, d'acide isophtalique et d'acide téréphtalique.

7. Feuille tubulaire suivant l'une quelconque des revendications 1 à 6, caractérisée en ce que la couche médiane est constituée d'une polyoléfine formée d'homopolymères de l'éthylène ou du propylène et/ou de copolymères d'alphaoléfines linéaires comportant de 2 à 8 atomes de carbone.

8. Feuille tubulaire suivant la revendication 7, caractérisée en ce que les polyoléfines de la couche médiane présentent un point de fusion supérieur à 120°C et, de préférence, se composent de polyéthylène linéaire de basse densité, de polyéthylène haute densité, d'homopolymères de polypropylène, de copolymères séquencés du polypropylène et de copolymères stochastiques du polypropylène.

9. Feuille tubulaire suivant l'une quelconque des revendications 1 à 8, caractérisée en ce que les deux couches conférant de l'adhésivité se composent de polyoléfines modifiées par des groupes fonctionnels.

10. Feuille tubulaire suivant la revendication 9, caractérisée en ce que les polyoléfines modifiées sont des homopolymères ou copolymères modifiés de l'éthylène et/ou du propylène et éventuellement d'autres alphaoléfines linéaires comptant de 3 à 8 atomes de carbone, qui contiennent à l'état greffé des monomères appartenant au groupe des acides dicarboxyliques alpha-bêta-insaturés, comme l'acide maléique, l'acide fumarique, l'acide itaconique, ou leurs anhydrides, leurs esters, leurs amides, ou leurs imides.

11. Feuille tubulaire suivant la revendication 10, caractérisée en ce que les polyoléfines modifiées des deux couches conférant de l'adhésivité sont des copolymères de l'éthylène ou du propylène et éventuellement d'autres alphaoléfines linéaires comportant de 3 à 8 atomes de carbone avec des acides carboxyliques alpha-bêta-insaturés, comme l'acide acrylique, l'acide méthacrylique et/ou leurs sels de métaux et/ou leurs esters alkyliques, ou des copolymères de greffage correspondants des monomères précités sur des polyoléfines, ou des copolymères de l'éthylène et de l'acétate de vinyle partiellement saponifiés, qui sont éventuellement polymérisés par greffage avec un acide carboxylique alpha-bêta-insaturé et qui présentent un faible degré de saponification, ou leurs mélanges.

12. Feuille tubulaire suivant l'une quelconque des revendications 1 à 11, caractérisée en ce qu'elle est constituée d'une feuille tubulaire co-extrudée et biaxialement étirée.

13. Feuille tubulaire suivant l'une quelconque des revendications 1 à 12, caractérisée en ce qu'elle est thermofixée.

14. Feuille tubulaire suivant l'une quelconque des revendications 1 à 13, caractérisée en ce que son épaisseur de paroi varie de 30 à 90 µm, de préférence 40 à 80 µm.
